# EUROPEAN PATENT APPLICATION

(11) **EP 1 815 745 A1**
(43) Date of publication of application: **08.08.2007**
(21) Application number: 06075243.3
(22) Date of filing: 03.02.2006
(51) Int. Cl.: A23C 1/16, A23C 9/152

(54) **Cholesterol-lowering dairy products and methods for their preparation**

(71) Applicant: Friesland Brands B.V., 7943 PE Meppel (NL)
(72) Inventor: Glas, Cornelis, 9255 KE Tytsjerk (NL); Peerlkamp, Nienke Jacqueline, 8932 KH Leeuwarden (NL); van der Zee, Luutsche, 9861 HJ Grootegast (NL)
(74) Representative: Winckels, Johannes Hubertus F.

(57) **Abstract**

The invention relates to a concentrated or dried milk product having cholesterol-lowering effects and to methods for preparing the same. Provided is a process for the preparation of a milk concentrate or milk powder having a cholesterol-lowering effect, comprising :
- preparing a milk liquid;
- preparing a fat fraction comprising at least one sterol; and
- subjecting the milk liquid to an evaporation procedure, during which procedure the fat fraction is added to the milk liquid before, in or after the liquid collector of one or more effects of the evaporator. Also provided is the product obtainable thereby.

## Description

The invention relates to a concentrated and/or dried milk product having cholesterol-lowering effects and to methods for preparing the same. More particularly, the present invention relates to a method for adding a plant sterol to a milk product, such as evaporated, condensed or dry milk, without the use of an emulsifier and/or stabilizer of non-dairy origin.

Cholesterol travels through the blood attached to a lipoprotein. Lipoproteins are either high density or low density, depending on how much protein they have in relation to fat. Lipoproteins with more protein than fat are called high-density lipoproteins (HDL). Lipoproteins with more fat than protein are called low-density lipoproteins (LDL). LDL cholesterol collects inside the walls of the arteries and often contributes to the formation of plaque. In humans, the link between elevated levels of serum (LDL) cholesterol and risk of heart disease is well-established. High levels of cholesterol in the blood are associated with an increased risk of cardiovascular diseases, such as hyperlipidemia, arteriosclerosis, arrhythmia, cardiac infarction, and so on. As a result of over-ingestion of cholesterol, diseases associated with cholesterol are becoming an increasing problem worldwide. It is known that both endogenous and dietary cholesterol move into the small intestine and about 50% thereof is absorbed from the intestines.
It has also been known since the early 1950's that plant sterols are effective in lowering blood serum cholesterol levels. The plant sterols, also known as phytosterols, are thought to reduce the net absorption of dietary cholesterol in the intestine. The most abundant plant sterols are sitosterol, campesterol and stigmasterol. It has been shown that sitosterol and its hydrogenated form are the main sterols of interest for lowering serum cholesterol. Because of their ability to block dietary cholesterol absorption, phytosterols can help lower total and LDL cholesterol levels. In the last few years, clinical research has also discovered other effects of plant sterols, including reducing symptoms of an enlarged prostate, improving the control of blood sugar among people with diabetes, and reducing inflammation among patients with autoimmune diseases such as rheumatoid arthritis and lupus.

Whereas phytosterols have been known for decades for their cholesterol lowering effects, they are generally very high melting compounds and, accordingly, difficult to formulate into consumer foods and beverages due to poor solubility in both fat and water. Prior art attempts to overcome these technical difficulties typically make use of several methods including sterol esterification, homogenization, encapsulation, and/or the addition of (synthetic) "manufacturing aids" such as stabilizers, gums, emulsifiers, and the like.

US Patent 3,085,939 describes pharmaceutical compositions containing sitosterol which are stabilised by the presence of emulsifiers and a colloid material avoiding contact between the sitosterol and oil. US Patent 4,195,084 describes pharmaceutical compositions containing sitosterols whose taste and stability are made acceptable by the combined presence of a chelating agent, carboxymethyl-cellulose, sorbitol, emulsifier and simethicone. However, resorting to such additives is unacceptable in food products which are consumed in large quantities by healthy subjects.

WO00/33669 discloses that plant sterols can be mixed with or dissolved in a melt of a food emulsifier (e.g. monoglyceride, soy lecithin), to be admixed with a protein-containing product (e.g. skim milk) at an elevated temperature. The mixture is homogenized to form an emulsion of sterol-containing liposome particles in the protein-containing product. The resulting emulsion can then be mixed into (aqueous) food stuffs.

EP-1059851 discloses a stable emulsifier-free homogenous aqueous suspension, containing a high melting lipid such as phytosterol and a thickener, e.g. xanthan gum, pectin, starch. The sterol suspension can serve as an intermediate in the preparation of a food composition. The preparation of skimmed yoghurt with 0.5% β-sitosterol is described, comprising the preparation of a pumpable paste of plant sterol and xanthan gum in water and the injection of the paste into a liquid mix consisting of milk, skimmed milk powder and modified starch. Thereafter, the mixture is homogenised, pasteurised and recovered.

WO2004/066753 describes the use of a crystal modifier including sorbitan tristearate (STS) for the manufacture of a composition in dry form comprising unesterified sterol, preferably in combination with an additional manufacturing aid, for example sorbitan monostearate or propylene glycolmonostearate.

However, the above methods employing (non-natural) manufacturing aids to formulate the sterol in a food item have a number of disadvantages. It increases the cost of the product, and in some instances the consumer may also find some of these products undesirable from a labeling, texture, and viscosity standpoint. Stabilizers and gums often add viscosity, i.e., thickness to a liquid product, thereby detracting from its organoleptic impression. Additionally, dispersing plant sterols causes a beverage to have a powdery texture, which also impacts negatively on consumer acceptance.

There is an ever-growing demand for new foods which can deliver sufficient amounts of sterols to humans to lower their blood cholesterol levels. It would be particularly desirable to incorporate plant sterols in foodstuffs with a recognised nutritional value that are typically consumed in large amounts, such as milk products, while minimizing the use of any undesirable, milk-foreign additives.
It is therefore an object to provide a convenient method for the addition of a cholesterol-lowering sterol to a dairy product while minimizing and preferably avoiding the use of additives that are of non-dairy origin. More specifically, it is an object to provide a simple and efficient procedure for the incorporation of a plant sterol into a milk product which is in a dry or concentrated form.
The present invention is directed to the finding that plant sterols are advantageously introduced during the process of evaporating a dairy product, such as milk. Accordingly, the invention provides a process for the preparation of a milk concentrate or milk powder having a cholesterol-lowering effect, comprising the steps of preparing a milk liquid, preparing a liquid fat fraction comprising at least one sterol, and subjecting the milk liquid to an evaporation procedure, during which procedure the fat fraction is added to the milk liquid before, in or after the liquid collector of one or more effects of the evaporator. Preferably, the thus obtained milk / fat mixture comprising a sterol is homogenised.

Thus, rather than mixing the cholesterol-lowering sterol with the aqueous milk liquid prior to the evaporation process, the sterol is solubilized or suspended in a liquid fat and added in a later stage at which the milk is in a more concentrated state. An advantage of this procedure is that no additives or modifiers are required to solubilize the sterol in the aqueous, typically low-fat milk liquid. Furthermore, since the sterol does not need to traverse the complete course of the evaporator, only limited parts of the evaporator are exposed to fatty matter. This significantly reduces the time and costs of cleaning of the evaporator, including effects and supplying and connecting lines, in between different evaporator applications, such as for the manufacture of condensed dairy products with and without added sterols or with different types of sterols. An additional advantage is that sterol incorporation according the invention via fat injection in an effect of the evaporator ensures a homogeneous distribution of fat particles comprising the sterols. The addition of a fat fraction to a milk liquid during the evaporation process is known in the art, for instance to standardise the milk to a certain fat content. EP0624317 in the name of the applicant describes that unsaturated fatty acids with an unstable character (e.g. PUFA's) are advantageously added to a milk liquid in one or more effects of an evaporator in order to reduce fatty acid oxidation. However, it has heretofore not been disclosed or suggested to introduce a sterol, known to be difficult to formulate into consumer foods without the use of additives or emulsifiers, during the evaporation process.
The milk fluid which is the starting material of the process according to the invention and to which the sterol is added in one or more effects of the evaporator, may or may not be obtained through recombination of milk raw materials and optional additives. Non-fat solids can be added to the milk fluid. The milk fluid may be chilled for storage or be used directly. The milk liquid can be a fat free or low fat aqueous product. Suitable milk liquids can be composed from whole milk (powder), partially decreamed milk (powder), permeates derived from (skimmed) milk or whey by techniques like microfiltration, ultrafiltration and the like, skim milk (powder), buttermilk (powder), butter serum, whey (powder), desalted whey (powder), derivatives recovered from whey (e.g. alpha-lactalbumin, beta-lactoglobulin, glycomacropeptide), casein, protein hydrolysates, and combinations of these raw materials. Optionally, it is possible to add, as additives, milk-foreign protein and/or carbohydrate sources, vitamins, minerals including calcium, nucleotides, nucleosides, aromatic, flavouring and coloring substances, phytoestrogens, sweetener, amino acids and stabilizers. The milk liquid may contain soluble prebiotic carbohydrates or derivatives thereof. By definition, a prebiotic is a non-digestible food ingredient that beneficially affects the consuming host by selectively stimulating the growth and activity of specific beneficial bacteria in the intestinal tract. Examples of prebiotic carbohydrates include oligofructose and inulin.

After being prepared, optionally after a preheating step and/or a homogenization step has been performed, the milk liquid is fed to the evaporator. The heat treatment must be sufficient to kill microorganisms that are present in the milk liquid. Typical conditions are 70-150°C for 0.2 seconds to 15 minutes, preferably 100-140°C for 1 second to 5 minutes. Part of the water is subsequently evaporated from the milk liquid in an evaporator, until a total dry solids content of about 10-40%, preferably 15-30% is obtained. During the evaporation procedure, an appropriate amount of fat comprising the sterol is added in one or more effects of the evaporator. Typically, an amount of fat is added to obtain a final fat content of 1 to 35% in the dry matter.

The addition of sterol can take place before, in and/or after the liquid collector of an effect. Next, known process steps, such as homogenization, pasteurization, sterilization or spray-drying can take place. If a concentrated liquid product is prepared, this is subsequently packaged in appropriate amounts in bottles, cans or other types of containers, sometimes utilizing liquid nitrogen and/or carbon dioxide. Powders may be mixed with one or more other dry ingredients, such as vitamins, minerals and/or probiotics, which mixture, after packaging can be stored under nitrogen and/or carbon dioxide.
The fat fraction which is introduced into one or more effects of the evaporator, for instance by spraying, may contain animal or vegetable fats such as fish oil, egg yolk fat, liver fat, lard, vegetable oil, for instance soy oil, corn oil, palm oil, sunflower oil, groundnut oil, olive oil and the like, algae oil, butter oil and fractions, trans-esterified derivatives or mixtures of these oils and fats. In a preferred embodiment, the fat fraction comprises an oil which is relatively rich in unsaturated fatty acids, more preferably wherein the oil contains a long-chain poly-unsaturated fatty acid (LC-PUFA) of the omega-3 and/or omega-6 type, because these are known to have beneficial health effects. Oils derived from safflower, sunflower, corn, soya, evening primrose, pumpkin and wheatgerm are rich in omega-6 unsaturated fatty acids. Oils derived from linseed (flaxseeds), rapeseed (canola) or soya beans are rich in omega-3 unsaturated fatty acids. A general drawback of adding valuable compounds containing poly-unsaturated fatty acids resides in their high susceptibility to damage from heat, light, and oxygen. When exposed to these elements for too long, the fatty acids become oxidized, also referred to as rancid. Rancidity not only alters the flavor and smell, but it also diminishes the nutritional value of the food item to which the fatty acids are added. More importantly, the oxidation of fatty acids produces free radicals, which are believed to play a role in the development of cancer and other degenerative diseases. However, in a method of the invention wherein the fat fraction is fed into one or more effects of the evaporator, fatty acid oxidation is minimized (see EP0624317 of applicant).
Unless specifically indicated otherwise, the term "sterol" as used herein refers to phytosterols, phytostanols and their corresponding esters and oligosidic derivatives. Of course, the selected sterol is preferably FDA approved. The cyclopentanoperhydrophenanthrene ring structure is common to all sterols; the differences among the various sterols are primarily in the structure of the side chains. Phytosterols are natural components of edible vegetable oils. Phytostanols are saturated phytosterols. That is, they have no double bonds in the sterol ring. Phytostanols are also known as plant stanols and saturated plant sterols. Phytostanols themselves have extremely poor solubility in both aqueous and lipid media. Esterification of phytosterols or phytostanols with fatty acids, in particular long chain (poly)unsaturated fatty acids, increases their lipid solubility.

The skilled person can select any sterol that is available when practising the present invention. Some plant sterols in this regard include sitosterol, campesterol, stigmasterol, spinosterol, taraxasterol, brassicasterol, desmosterol, chalinosterol, poriferasterol, clionasterol, andergosterol. The invention also employs mixtures of plant sterols, such as two component, three component, and four component mixtures. The source of these and other plant sterols are rice bran oil, corn bran oil, corn germ oil, wheat germ oil, corn oil, safflower oil, oat oil, olive oil, cotton seed oil, soybean oil, peanut oil, black tea, green tea, colocsia, kale, broccoli, sesame seeds, shea oils, grapeseed oil, rapeseed oil, linseed oil, canola oil, tall oil and oils obtained from wood pulp.

Plant sterols may also be hydrogenated to produce plant stanols. Accordingly, the plant stanols of the present invention are described as the hydrogenation products of the various plant sterols such as sitosterol but may also be obtained naturally from various plants used in the art, without hydrogenating the plant sterol. Thus, the term "hydrogenation product of plant sterols" as applied to plant stanols, and as used herein, includes not only the synthetic plant stanols but also those obtained from natural sources. Some plant stanols in this regard include sitostanol, campestanol, stigmastanol, spinostanol, taraxastanol, brassicastanol, desmostanol, chalinostanol, poriferastanol, clionastanol, andergostanol. The skilled artisan can also select any plant stanol from those that are available. The invention also employs mixtures of plant stanols, such as two component, three component.

According to the invention, the sterol is added to or mixed with a liquid fat fraction which can be fed into the evaporator, for instance by spraying. Preferably, said adding or mixing is performed without the use of synthetic additives and/or emulsifiers. In a preferred embodiment of the invention, the sterol is a low-melting point lipid. This allows for the simple melting of the sterol at a relatively low temperature and mixing the melted sterol with the fat fraction. Generally, no further additives are required for the solubilization of sterol esters in the fat fraction. The sterol preferably is a viscous paste at ambient temperature and has a melting point below around 60°C, e.g. 30-58°C.

Sterol esters and/or stanol esters are of particular interest for the present invention because they have lower melting points as compared to their free, unesterified counterparts. For example, Hoffman G. in, "The chemistry and technology of edible oils and fats and their high fat products", Academic Press Limited, 1989, describes how the solubility and poor mouth feel of β-sitosterol is improved by esterification. The esterified product has a palatable texture, even in its pure state. WO 98/01126 discloses a process for preparing a mixture of fatty acid esters from plant sources such as rice bran and sheanut by hydrolysing a sterol ester or mixture of sterol esters from the plant source to obtain a mixture comprising phenolic acids and/or fatty acids and free sterols, followed by esterifying the so-obtained free sterols with particular fatty acids. In another process disclosed in WO 98/38206, there is described the preparation of a mixture of stanol esters, particularly plant-derived stanol esters which can be incorporated into food products in order to lower blood serum cholesterol levels in humans. The stanol esters are prepared by hydrogenating a sterol blend at an elevated temperature, followed by interesterifying the intermediate stanol blend with a fatty acid methyl ester at elevated temperature, followed by purification of the resultant blend.

In a specific aspect of the invention, the fat fraction comprises esterified β-sitosterol, campesterol, stigmasterol, brassicasterol or a combination thereof. Preferably, the sterol or stanol is esterified to food grade fatty acid from vegetable origin, an unsaturated fatty acid. For example, plant sterols esterified with rapeseed oil fatty acids having a melting point of 25-30°C can be used. They are marketed by Archer Daniels Midland (ADM) under the tradename CardioAid®-S. Another example is a mixture of naturally occurring plant sterols esterified with food grade fatty acids sold by Cognis Nutrition and Health under the tradename Vegapure® 95 E, which mixture is a clear oil above 50°C.
The step of preparing the fat fraction preferably comprises solubilizing at least one low-melting point sterol in an edible oil, for instance a vegetable oil. A process of the invention is however not limited to the use of low-melting sterols and the preparation of a fat fraction comprising a sterol may comprise the use of an agent which aids in the solubilization of the sterol in the fat fraction. Such agents are known in the art. WO2004/066753 describes the use of a crystal modifier comprising sorbitan tristearate (STS) to solubilize unesterified sterols. Another example involves the preparation of a microcrystalline phytosterol suspension in oil (Summanen et al. (2003), J Pharm. Pharmacol. 55(12):1673).

In addition to the at least one cholesterol-lowering sterol, the fat fraction may comprise other additives, for instance antioxidants such as ascorbyl palmitate, butylated hydroxytoluene (BHT), vitamin E or β-carotene. Furthermore, at least one non-sterol lipid can be added. The non-sterol lipid can be a polar lipid, for instance a glycerol-based phospholipid or a sphingolipid, or a neutral lipid, for instance a mono-, di- or triglyceride or a free fatty acid. The polar lipid can be purified or it can be added to the fat fraction in a partially purified or crude form. Preferably, the polar lipid has emulsifying properties. The phospholipids derive value from being particularly good emulsifiers and contribute to the storage and heat stability of the concentrated or dried milk product. In one embodiment, the fat fraction comprises lecithin. Lecithin is a complex mixture of phospholipids, glycolipids with small amounts of carbohydrates and in some cases triglycerides. Most commercially available crude lecithins are derived from soy beans and are byproducts of the production and refining of vegetable oil. Other plant sources are for example sunflowers and rape seeds. Lecithins of animal origin are obtained mainly from egg yolk and in a limited extent from milk as raw material.

The non-sterol lipid is preferably of dairy origin to minimize the amount of dairy-foreign components in the dairy product. In one embodiment, the dairy lipid is a polar lipid. A preferred source of dairy polar lipids is sweet buttermilk or butterserum, which contain many phospholipids and sphingolipids. When using emulsifier-containing butterserum or buttermilk, the evaporated milk product comprising a sterol can be sterilized without addition of phosphates or other milk-foreign stabilizers. Furthermore, a crude polar lipid fraction derived from cow milk is capable of lowering the level of serum LDL cholesterol and triglycerides and the accumulation of triglycerides in the liver (Japanese patent application JP 2001-275614A).

There are three main types of sphingolipids: ceramides, sphingomyelins, and glycosphingolipids, which differ in the substituents on their head group. Ceramides are the simplest type of sphingolipid. They consist simply of a fatty acid chain attached through an amide linkage to sphingosine. Sphingomyelins have a phosphorylcholine or phosphorylethanolamine molecule esterified to the 1-hydroxy group of a ceramide. Glycosphingolipids are ceramides with one or more sugar residues joined in a 6-glycosidic linkage at the 1-hydroxyl position. Glycosphingolipids may be further subdivided into cerebrosides and gangliosides. Cerebrosides have a single glucose or galactose at the 1-hydroxy position, while gangliosides have at least three sugars, one of which must be sialic acid.

The addition of sphingolipids to food and the emerging importance of sphingolipids to nutrition has attracted considerable attention over the past few years (see Vesper et al. J Nutr. 1999 Ju1;129(7):1239-50 for a review on this topic). For example, sphingolipids were shown to have tumour inhibiting properties in the colon and to exhibit antibacterial and antiviral properties in vitro. Of particular relevance for the present invention is the recent finding that sphingolipids can lower cholesterol absorption in the intestines. Nieuwenhuizen et al. disclose in WO2004/064820 the use of sphingolipids, among others sphingoid bases, ceramide, sphingomyelin (SM) and cerebroside, as a plasma and/or serum cholesterol and triglyceride lowering agent. Noh and Koo reported that SM can inhibit intestinal absorption of cholesterol and fat in rats (J Nutr. 2003 Nov;133(11):3571-6) and that SM from milk is more effective than egg SM (J Nutr. 2004 Oct;134(10):2611-6.). Accordingly, a process of the invention preferably comprises the incorporation of at least a sterol and at least a sphingolipid, preferably a sphingolipid of dairy origin. Dairy polar lipids, including dairy sphingolipids, can be isolated and purified according to methods known in the art, for example according to US 2004/0047947. It is also possible to use a crude or raw milk lipid fraction comprising a mixture of various lipid classes as a source of sphingolipids.

The sterol and the non-sterol lipid, e.g. a sphingolipid, are conveniently introduced simultaneously in one or more effects of the evaporator. They can be mixed prior to being added to the liquid fat fraction. However, it is also possible to introduce the non-sterol lipid at a distinct stage during the process, for example in a different effect of the evaporator or even directly to the milk liquid prior to the evaporation procedure.

In one aspect, a thickened milk liquid is produced in a process according to the invention. The thickened milk liquid can subsequently be dried to form a powder. By bringing milk into a concentrated or powdered form and subjecting it to one or more heat treatments and to an aseptic packaging method, not only its storage life is prolonged but also the cost of transport is reduced. For use, the cholesterol-lowering concentrated or powdered milk can be recombined or reconstituted. Accordingly, also provided is a process for preparing a cholesterol-lowering milk product which is ready for consumption, comprising providing a milk concentrate or milk powder according to the invention and reconstituting the concentrate or powder with a suitable liquid, preferably water.

The invention furthermore provides a cholesterol-lowering milk product, e.g. a milk concentrate, milk evaporate or powder milk, which is obtainable by a process according to the invention. In humans, the consumption of 1.5-1.8 g/d of plant sterols or stanols reduces cholesterol absorption by 30-40% (Jones et al. J Lipid Res. 2000;41(5):697-705; Normen et al. 2000;71(4):908-913). At higher doses (2.2 g/d of plant sterols), cholesterol absorption was reduced by 60% (Richelle et al. Am J Clin Nutr. 2004;80(1):171-177.15). Doses used are 1.5 to 4.5 grams of sterol daily. A few studies indicate a dose of about 2 grams of phytosterols daily to be optimal.

Accordingly, a product of the invention comprises preferably sterol in an amount of about 100 mg to about 4500 mg per serving, more preferably about 200 mg to about 3000 mg per serving, for example 125, 150, 200, 300, 500, 750, 800, 1000, 1200, 1500, 1800, 2000, 2500 or 2800 mg per serving, wherein the quantity can be taken in one or several times during the day. These amounts refer to the amount of free, unesterified sterols in the product when it is ready for consumption, for instance following reconstitution of an evaporate, condensate or powder with a desired amount of liquid, such as water. For example, it refers to the total amount of sterol in 150-250 ml of ready-to-drink liquid.

A milk product in a condensed or evaporated form preferably comprises between about 1 to 11% fat and about 3 to 12%protein. However, other fat and/or protein concentrations may also be used when practising the present invention.

A milk product of the invention in a dry or powdered form preferably comprises about 1 to about 40% by weight fat, more preferably between 4 and 35%, such as 8, 10, 15, 20, 25 or 30% by weight fat. In preferred embodiments the milk powder comprises from about 56 to 95%, preferably between 61 and 92% by weight, for example 65 to 85% skim milk solids or between 78 and 83% skim milk solids. The humidity of the product is typically around 2.5 to 4%. The sterols can be present in an amount of 1.5 to 5% by weight, although lower and higher sterol concentrations are also encompassed. In one embodiment, a product comprises about 56 to 88% non-fat solids, some or all of which can be milk solids.

Because the process allows to incorporate sterols together with the fat fraction, a product of the invention contains only a minimal amount of synthetic, milk-foreign "manufacturing aids" that are typically used in prior art methods to solubilize the sterols. Exemplary manufacturing aids which now can be minimized, or even dispensed with, include encapsulation aids, starches, and gums, pectin derivatives, alginates, emulsifiers like polysorbates, sodium stearyl lactylate, polyglycerol esters, crystal modifiers such as sorbitan tristearate (STS), sorbitan monostearate (SMS), propylene glycolmonostearate (PGMS), and thickeners such as xanthan gum and cellulose derivatives. In one embodiment, the product contains less than 50%, preferably less 40%, more preferably less than 15% by weight of milk-foreign manufacturing aids relative to the total amount of sterol in the product. In a most preferred embodiment, a milk concentrate or milk powder of the invention contains no such milk-foreign manufacturing aids at all.

As mentioned herein above, the milk product of the invention can be supplemented with additional non-sterol lipids, in particular milk polar lipids, for example glycerophospholipids and/or sphingolipids. Sphingolipids account for 0.01-0.02% of a typical western diet and the average consumption of sphingolipids by humans is about 300 to 400 mg daily. It has been shown that sphingolipid supplementation of the diet of rats and mice with 0.1-1% sphingolipid has beneficial health effects, including tumour suppression and lowering of serum cholesterol and triglycerides. In one embodiment, the milk product of the invention comprises 0.01 to 30% by weight, preferably 0.05 to 10%, of (milk) polar lipids. Also here, the amounts refer to the amount of glycerophospholipids and/or sphingolipids in the product when it is ready for consumption, for instance following reconstitution of an evaporate, condensate or powder with a desired amount of liquid, such as water. For example, the invention provides a milk-based product comprising about 0.1 to about 3 g of (milk) sphingolipids per serving. Preferably, it comprises 150, 200, 400, 600, 800, 1000, 2000 or 2500 mg sphingolipid per serving, wherein the quantity can be taken in one or more times per day. For example, the milk product is a 150 ml liquid milk-based drink comprising 0.25 g sphingolipids. In another embodiment, it is a milk-based desert with a 200 ml total volume comprising 1 g sphingolipids, e.g. milk sphingolipids.

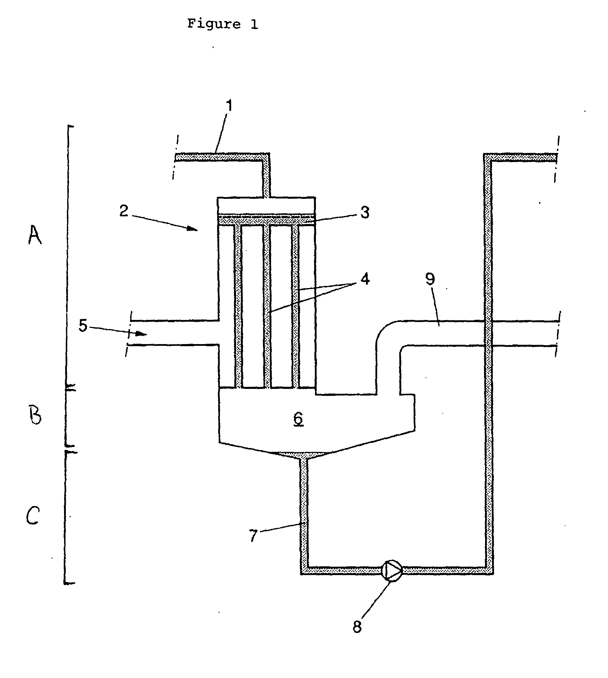

A further aspect of the invention relates to a method of treatment or prevention of high cholesterol which comprises the administration or consumption of a milk product of the invention.
The present invention will be exemplified with reference to the drawing and in and by the examples below.
The schematic drawing shows an effect of a multiple-effect evaporator which is typically used in the milk industry to prepare milk condensates, milk evaporates and powdered milk products. The milk liquid to be evaporated is introduced via pipe 1 into effect 2. Upon leaving pipe 1, the milk liquid is equally distributed by divider plates 3 over the downpipes 4. The milk liquid forms a film over the walls of these downpipes 4, which are heated externally with water vapour introduced via pipe 5. A two-phase flow of concentrate and vapour enter liquid collector 6, where product and vapour are separated. The product is pumped through pipe 7 and pump 8 to the divider plates of the next effect. The vapour is directed via line 9 to the next effect to condense on the outside of the downpipes. In the process of the invention, the addition of the fat fraction comprising sterol takes place in one or more effects either before (A), in (B), and/or after (C) the liquid collector of an effect.

### EXAMPLES

The invention will further be described and illustrated by reference to the following examples. It should be noted however, that these examples should not be construed as limiting the invention in any way.

### Example 1: Manufacture of a cholesterol-lowering milk concentrate.

500 Litre skimmed milk was standardised to yield a milk liquid with a protein content of e.g. 35.8% protein / milk solids non fat with lactose or whey permeate. Separately, 6.5 kg Cardio Aid phytosterols from ADM (containing >56% total phytosterols; 40-58% β-sitosterol; 0-5% β-sitostanol; 20-30% campesterol; <5% campestanol; 14-22% stigmasterol; < 3% brassicasterol; <3% other sterols or stanols) were heated to the same temperature as the (vegetable) fat/oil (30-58°C) and were added to the fat fraction comprising palm oil, while mixing. This fat/sterol mixture is added to the milk via fat injection as described as follows.

The milk liquid was heated to 120 °C by known techniques, followed by sustained heating for 3 minutes. The hot milk was then transferred into the first effect of a falling film evaporator and evaporated to a solids content of approximately 24%. Under the down pipes of the second effect, the fat mixture with sterols was added in a constant flow, evenly distributed over 80% of the required evaporation time. The milk with fat and sterols was homogenised in a two-step homogeniser to a fat particle size between 0.36 µm and 0.47 µm (measured with coulter LS13 320) to yield a milk concentrate with a cholesterol-lowering effect. Depending on the stability of the evaporate, phosphates and/or citrates and/or carbonates can be added. Also, the milk can be standardised with water. The milk was filled into small tins, closed and sterilised according to either batch or continue sterilisation process.

### Example 2:

A milk concentrate comprising sterols was prepared as described in Example 1, with the modification that the milk also was standardised with 15% of cream serum (425 litre of skimmed milk with 75 litre cream serum) prior to evaporation. The cream serum comprises milk polar lipids, among others milk sphingolipids including milk SM.

### Example 3:

A milk concentrate comprising sterols was prepared as described in Example 2, except that the oil/fat fraction comprising cholesterol-lowering sterols were added just after evaporation via fat injection.

### Example 4:

To obtain a low fat milk, 425 litre skimmed milk and 75 kg cream serum was standardised to a protein content of e.g. 35.8% protein/milk solids non fat with lactose or whey permeate. 8.6 kg of Vegapure 67 (from Cognis, containing <80% β-sitosterol; <15% β-sitostanol; <40% campesterol; <5% campestanol; <30% stigmasterol; < 3% brassicasterol; <3% other sterols or stanols; glucose syrup; sodium caseinate; anti-oxidants and anti caking agent) was added to the milk without emulsifier while mixing. Mixed milk was further evaporated and processed according to example I.

### Example 5:

According to example 1, but using 6 kg of Vegapure 95E from Cognis as sterol source instead of Cardio Aid S.

### Example 6:

Skimmed milk was standardised to yield a milk liquid as described in Example 1. Phytosterols/stanols were added to the milk liquid together with a fat fraction and the mixture was homogenised in a two-step homogeniser in which the second step was around 30 bar. A standard yoghurt culture was added to the milk and the fermentation was executed with or without mixing, in a fermentation tank or in the cup according to normal yoghurt production procedures.

## Claims

1. A process for the preparation of a milk concentrate or milk powder having a cholesterol-lowering effect, comprising :
- preparing a milk liquid;
- preparing a fat fraction comprising at least one sterol; and
- subjecting the milk liquid to an evaporation procedure, during which procedure the fat fraction is added to the milk liquid before, in or after the liquid collector of one or more effects of the evaporator.

2. Process of claim 1, wherein said sterol is selected from the group consisting of phytosterols, phytostanols and their corresponding esters.

3. Process of claim 1 or 2, wherein said sterol has a melting point below around 60°C.

4. Process according to any one of claims 1 to 3, wherein said sterol is a phytosterol ester, a phytostanol ester or a combination thereof.

5. Process according to any one of claims 1 to 4, wherein said sterol is esterified to an unsaturated fatty acid.

6. Process according to any one of claims 1 to 5, wherein said fat fraction comprises esterified β-sitosterol, campesterol, stigmasterol, brassicasterol or a combination thereof.

7. Process according to any one of claims 1 to 6, wherein preparing the fat fraction comprises solubilizing or suspending at least one sterol in an edible oil, preferably a vegetable oil.

8. Process according to any one of claims 1 to 7, wherein at least one non-sterol lipid is added to the milk liquid, preferably during the evaporation procedure.

9. Process according to claim 8, wherein said non-sterol lipid is a polar lipid, such as a glycerophospholipid or a sphingolipid, or a neutral lipid.

10. Process according to claim 8 or 9, wherein said non-sterol lipid is a milk lipid, preferably a milk sphingolipid.

11. Process according to any one of claims 8 to 10, wherein said sterol and said non-sterol lipid are mixed prior to being added to the fat fraction.

12. Process according to any of the preceding claims, wherein a thickened milk liquid is produced.

13. Process of claim 12, wherein the thickened milk liquid is subsequently dried to form a powder.

14. A process for preparing a cholesterol-lowering milk product which is ready for consumption, comprising providing a milk concentrate or milk powder according to any one of the above claims and reconstituting the concentrate or powder with a suitable liquid, preferably water.

15. A cholesterol-lowering milk product obtainable by a process according to any one of claims 1 to 14.

16. Product according to claim 15, comprising about 100 mg to about 4500 mg sterol per serving, more preferably about 200 mg to about 3000 mg per serving.

17. Product according to claim 15 or 16, containing less than about 50%, preferably less 40%, more preferably less than 15% by weight of milk-foreign sterol manufacturing aids relative to the total amount of sterol in the product.

18. Product according to any one of claims 15 to 17, comprising about 0.1 to about 3 g of sphingolipids per serving, preferably milk sphingolipids.
